# EUROPEAN PATENT SPECIFICATION

(11) **EP 1 770 296 B1**
(45) Date of publication and mention of the grant of the patent: **09.01.2019**
(21) Application number: 05743882.2
(22) Date of filing: 27.05.2005
(51) Int. Cl.: F16C 33/80, B60B 27/00, F16C 19/18, F16C 33/58, F16C 33/78

(54) **VEHICLE BEARING DEVICE**
FAHRZEUGLAGERVORRICHTUNG
DISPOSITIF DE PALIER POUR VÉHICULE

(30) Priority: 28.05.2004 JP 2004158698
(43) Date of publication of application: 04.04.2007
(73) Proprietor: NTN Corporation, Osaka-shi, Osaka 550-0003 (JP)
(72) Inventor: TORII, Akira, Shizuoka, 4380037 (JP); ISHIKAWA, Tomomi, Shizuoka, 4380037 (JP); SUZUKI, Syougo, Shizuoka, 4380037 (JP)
(74) Representative: Hirsch & Associés
(86) International application number: PCT/JP2005/009739
(87) International publication number: WO 2005/116471

(56) References cited:
- EP-A1- 1 277 978
- GB-A- 2 072 767
- JP-A- 63 312 515
- JP-A- 2003 240 003
- JP-U- 1 062 903
- JP-U- 61 134 404
- JP-U- 61 142 964
- JP-U- 61 200 704
- US-A- 2 956 632
- US-A- 4 647 230
- US-A- 4 783 180
- US-A- 4 789 252

## Description

### FIELD OF THE INVENTION

The present invention generally relates to a wheel support bearing assembly for use in automotive vehicles and, more particularly, to a sealing structure employed in such wheel support bearing assembly.

### BACKGROUND ART

Considering that most bearing assemblies used in vehicles, for example, cars are generally operated under severe conditions exposed to road surfaces, the bearing assemblies are generally required to have a reliable sealing structure to protect them from external dusts and dirt and muddy water. Also, with a view to eliminating the necessity of maintenance, a high effect of preventing leakage of a grease filled in the bearing assembly is also required. For these reasons, such a sealing structure as shown in Fig. 9A has long been employed. (See, for example, the Japanese Laid-open Patent Publication No. 2003-202028.) The bearing assembly shown therein includes an outer member 31 having double rows of raceway surfaces 34, an inner member 32 having double rows of raceway surfaces 35, and double rows of rolling elements 33 interposed between the associated raceway surfaces 34 and 35 defined respectively in the outer and inner members 31 and 32. An annular bearing space delimited between the inner and outer members 32 and 31 has an outboard open end sealed by a sealing member 37. An inboard open end of the annular bearing space has a slinger 38, press-fitted onto an inner race mounted on the inner member 32 and is sealed by a cap (not shown). It is to be noted that the Japanese Laid-open Patent Publication No. 2003-202028 discloses the use of a combination seal (not shown) on an inboard side of the bearing assembly to increase the sealability.

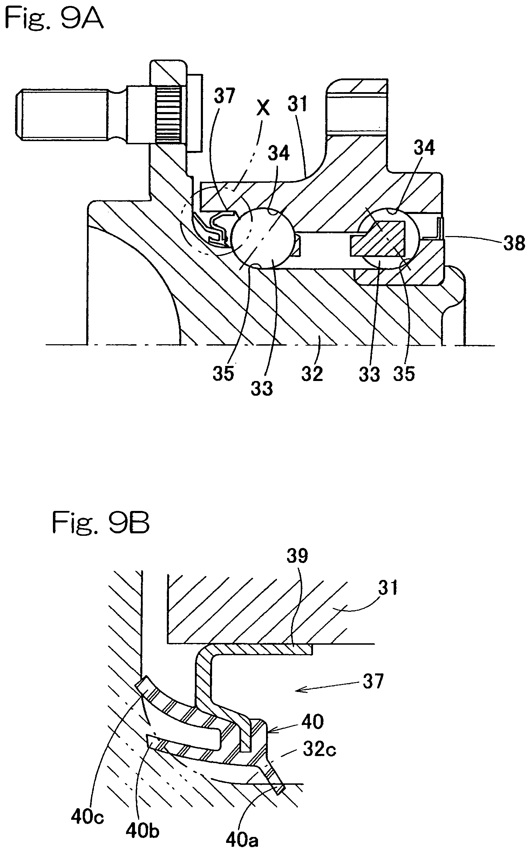

A portion indicated by X in Fig. 9A is shown on an enlarged scale in Fig. 9B. The sealing member 37 on the outboard side of the bearing assembly includes a core metal 39 having an elastic member 40 provided therein. The elastic member 40 has three sealing lips 40a, 40b and 40c in contact with a seal contact surface 32c on an outer peripheral surface of the inner member 32. The sealing lip 40a is a grease lip effective to prevent leakage of a grease filled in the bearing space and extends inwardly of the bearing space. The other sealing lips 40b and 40c are a dust lip effective to prevent intrusion of dust and muddy water into the bearing space. Those sealing lips 40a to 40c have a respective tip that is so shaped as to be held in contact with the sealing contact surface 32c under a predetermined interference.

However, with the outboard sealing structure employed in the above described bearing assembly, the use of the sealing member 37 having a plurality of the sealing lips 40a to 40c results in increase of an axial dimension of the sealing member 37. This in turn results in increase of an axial length of the bearing assembly, accompanied by increase of the weight thereof. In the wheel support bearing assembly, which is one of automobile component parts, reduction of the weight as much as possible is required to increase, for example, the mileage. Also, since the sealing lips 40a to 40c of the sealing member 37 are engaged with the seal contact surface 32c of the inner member 32 under the predetermined interference, the contact friction between the sealing lips 40a to 40c and the sealing surface 32c tends to increase, accompanied by increase of the bearing rotational torque. In addition, the seal contact surface 32c that the sealing lips 40a to 40c slidingly contact is defined by an outer peripheral surface of a hub axle of the inner member 32 where the sliding surface 32c is apt to rust because the sliding surface 32c is exposed to muddy water and, as a result thereof, the frictional wear of the sealing lips 40a to 40c is so considerable that there is a high possibility of the muddy water intruding into the bearing space during the use for a substantial period of time. In order to prevent the muddy water from entering the bearing space, it may be contemplated to increase the interference, but the contact friction will increase, accompanied by further increase of the bearing rotational torque. For this reason, it is considered unadvisable and improvement thereof is desired for.

EP 1 277 978 A1 is also directed to a bearing with a sealing device. The sealing device comprises a dynamic sealing joint associated with the outer race and an annular frame associated with the other race. The annular frame has two tubular walls connected by a radially extending wall. A thin interstice is left between the inner surface of the outermost tubular wall of the annular frame and a tubular wall of a frame of the dynamic joint mounted to the outer peripheral surface of the outer race, so as to reduce the possibility for contaminants of access to the housing in which the dynamic joint is disposed.

### DISCLOSURE OF THE INVENTION

An object of the present invention is to provide a wheel support bearing assembly, in which exposure of a sliding surface for outboard sealing lips to the muddy water is suppressed as much as possible to thereby prevent the reduction in sealability which would otherwise result from the frictional wear of the sealing lips.

The wheel support bearing assembly of the present invention as defined in claim 1 is a bearing assembly for rotatably supporting a wheel relative to a vehicle body structure, which assembly includes an outer member having an inner peripheral surface formed with double rows of raceway surfaces, an inner member having an outer peripheral surface formed with raceway surfaces in face-to-face relation with the raceway surfaces of the outer member, and also having an outboard portion of the outer peripheral surface formed with a wheel mounting flange, double rows of rolling elements interposed between the opposed raceway surfaces, and outboard and inboard sealing structures for sealing opposite open ends of an annular bearing space delimited between the outer member and the inner member. The wheel mounting flange is provided with a shielding plate which is a member of a L-sectioned configuration including a tubular wall and an upright wall extending radially outward from the tubular wall, with the upright wall secured to an inboard surface of the wheel mounting flange. The tubular wall is positioned in the vicinity of an outer peripheral surface of an outboard end of the outer member so as to form a labyrinth seal between the tubular wall of the shielding plate and the outer member. And the outer peripheral surface of the outboard end of the outer member is provided with a guide structure for guiding in a direction downwardly of the outer member, a water flowing in between the shielding plate and the outer member along the flange and the shielding plate and, also, a water flowing in between the shielding plate and the outer member along the outer peripheral surface of the outer member.

According to this construction, in the outboard sealing structure, the water, which flows in between the shielding plate and the outer member, can be guided in a direction downwardly of the outer member by the guide structure. Accordingly, the entry of the muddy water towards a surface on a hub axle of the inner member which a contact seal fitted to the inner member slidingly contacts can be suppressed, thereby suppressing the rusting of the sliding surface. Therefore, it is possible to avoid the reduction of the sealability by suppressing the frictional wear of the contact seal. Also, the labyrinth seal formed between the shielding plate and the outer member performs mainly a function of preventing an entry of dust and muddy water or the like from the outside. Since the guide structure and the labyrinth seal can prevent the entry of the muddy water towards the contact seal and the sliding surface, then into the bearing space, the contact seal can be simplified in structure and the rotational torque brought about by the contact friction between the contact seal and the sliding surface can be reduced. Also, as a result of the simplification of the contact seal, the axial length of the inner member can be reduced and the bearing weight can be correspondingly reduced. Owing to these, it can contribute to increase of the mileage of the vehicle.

In the present invention, the guide structure is provided in a portion of the outer peripheral surface of the outer member that is axially covered by the tubular wall of the shielding plate in the labyrinth seal. This permits the guide structure to be axially arranged more outboard than an inboard free end of the shielding plate. According to this arrangement of the guide structure, muddy water flowing along both of the wheel mounting flange of the inner member and the outer member can be guided in a direction downwardly of the outer member by the guide structure, thereby preventing muddy water from entering the outboard sealing structure.

The guide structure may be a groove defined in the outer peripheral surface of the outer member in a direction circumferentially thereof, or may be a projection defined in the outer peripheral surface of the outer member in a direction circumferentially thereof. the guide structure can be formed integrally with the outer member and, therefore, increase of the number of component parts and increase of the number of assembling steps can be avoided.

In the present invention, the tubular wall of the shielding plate may be of a shape having a water return capable of returning the water, flowing along an outer surface of the shielding plate, towards a base end of the tubular wall. If the water return is provided in the shielding plate, it is possible to prevent water from entering through the free end of the tubular wall of the shielding plate after flowing along the outer surface of the shielding plate and, therefore, the entry of the muddy water into the sealing structure can be further assuredly avoided.

The shielding plate is preferably made of a material having a resistance to corrosion. The shielding plate is a component part arranged exposed to the muddy water and, if the shielding plate rusts, there is a possibility that rust may flow into the sealing structure together with the muddy water. For this reason, the shielding plate is preferred to be excellent in resistance to corrosion.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
according to a first preferred embodiment of the present invention;
Fig. 1B is an enlarged view of a portion shown by A in Fig. 1A;
Fig. 2 is an enlarged sectional view showing a different example of a contact seal shown in Fig. 1;
Fig. 3 is an enlarged sectional view showing a further example of the contact seal shown in Fig. 1;
Fig. 4 is a fragmentary sectional view of a portion of the wheel support bearing assembly according to a second preferred embodiment of the present invention, showing a sealing structure and a shielding plate;
Fig. 5 is a fragmentary sectional view of a portion of the wheel support bearing assembly according to a third illustrative embodiment, showing the sealing structure and the shielding plate;
Fig. 6 is a fragmentary sectional view of a portion of the wheel support bearing assembly according to a fourth preferred embodiment of the present invention, showing the sealing structure and the shielding plate;
Fig. 7 is a fragmentary sectional view of a modification of the fourth embodiment of Fig. 6, showing the sealing structure and the shielding plate;
Fig. 8 is a sectional view showing a peripheral structure of the wheel support bearing assembly according to the first embodiment;
Fig. 9A is a sectional view of the conventional example; and
Fig. 9B is an enlarged view of a portion shown by X in Fig. 9A.

### DETAILED DESCRIPTION OF THE EMBODIMENTS

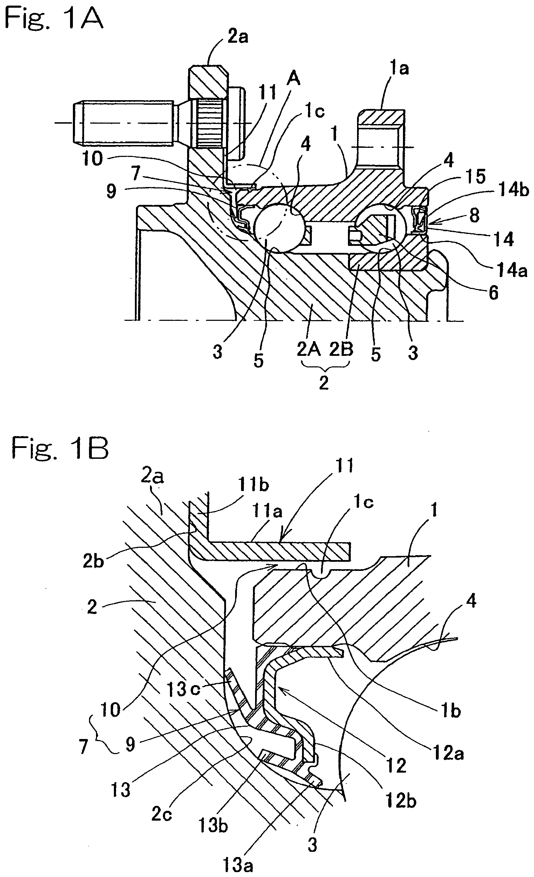

The first preferred embodiment of the present invention will be described with reference to Fig. 1. This embodiment is directed to a wheel support bearing assembly of an inner race rotating type for the support of a driven wheel and is classified as a third generation model. It is to be noted that in this specification, the terms "inboard" and "outboard" represent the sides facing the inside and outside of the vehicle, respectively. In Fig. 1, a left-hand portion represents the outboard side whereas a right-hand portion represents the inboard side.

This wheel support bearing assembly includes an outer member 1 having an inner peripheral surface formed with double rows of raceway surfaces 4, an inner member 2 having an outer peripheral surface formed with raceway surfaces 5 in face-to-face relation with the raceway surfaces 4, and double rows of rolling elements 3 interposed between the double rows of the raceway surfaces 4 and 5. The rolling elements 3 are in the form of balls and are retained by a retainer 6 employed for each row. This wheel support bearing assembly is a double row angular contact ball bearing and the raceway surfaces 4 and 5 are rendered to represent an arcuate sectional shape with the contact angles held in back-to-back relation with each other.

The outer member 1 serves as a stationary member and is a member of one-piece construction having a vehicle body fitting flange 1a. The inner member 2 serves as a rotatable member and is made up of a hub axle 2A, having a wheel mounting flange 2a, and a separate inner race 2B mounted on an outer peripheral surface of an inboard end of the hub axle 2A, with the respective raceway surfaces 5 and 5 formed in the hub axle 2A and the inner race 2B. The wheel mounting flange 2a is positioned on one end of the inner member 2 and more outboard than the outer member 1 and is so formed as to protrude more outward than an outer peripheral surface of a cylindrical body portion of the outer member 1. The inner race 2B is axially fixed to the hub axle 2A by staking an inboard end of the hub axle 2A. An annular bearing space delimited between the inner and outer members 2 and 1 has its opposite open ends sealed by respective sealing structures 7 and 8.

A portion indicated by A in Fig. 1A is shown on an enlarged scale in Fig. 1B. As shown therein, the sealing structure 7 on the outboard side includes a contact seal 9 fitted to the inner peripheral surface of the outer member 1 and held in contact with the outer peripheral surface of the inner member 2, and a labyrinth seal 10 positioned on an outer side of the bearing space than the contact seal 9 and provided between the inner and outer members 2 and 1. The labyrinth seal 10 is a non-contact seal defined by a gap between a shielding plate 11, mounted on the wheel mounting flange 2a of the inner member 2, and an outer peripheral surface 1b of the outer member 1. The shielding plate 11 is a member of a L-sectioned configuration including a tubular wall 11a and an upright wall 11b extending radially from the tubular wall 11a, with the upright wall 11b secured to an inboard surface 2b of the wheel mounting flange 2a. With this structure of the shielding plate 11, the labyrinth seal 10 is formed with an inner peripheral surface of the tubular wall 11a positioned in the vicinity of the outer peripheral surface 1b of the outer member 1. The outer peripheral surface 1b of the outer member 1 is formed with a groove 1c that extends in a circumferential direction thereof and is covered by the shielding plate 11 in the labyrinth seal 10. This groove 1c constitutes a guide structure.

The contact seal 9 includes a core metal 12 of a generally L-sectioned configuration, having a cylindrical wall 12a and an upright wall 12b, and an elastic member 13 made of an elastic material such as rubber and secured to the core metal 12. This contact seal 9 is fitted to the outer member 1 with the cylindrical wall 12a of the core metal 12 mounted on the inner peripheral surface of the outer member 1. The elastic member 13 is formed with three sealing lips 13a, 13b and 13c each having a tip oriented towards a sealing surface or sliding surface 2c defined on the outer peripheral surface of the inner member 2 in the vicinity of the wheel mounting flange 2a. The sealing lips 13b and 13c serve as a dust lip for preventing intrusion of dust and muddy water into the bearing space and have their tips that are so formed as to extend outwardly of the bearing space. Those dust lips 13b and 13c are held in contact with the sealing surface 2c under no interference. The innermost sealing lip 13a in the bearing space serves as a grease lip for preventing leakage of a grease filled in the bearing space and has its tip that is so formed as to extend inwardly of the bearing space. The innermost sealing lip 13a is held in contact with the sealing surface 2 under a predetermined interference.

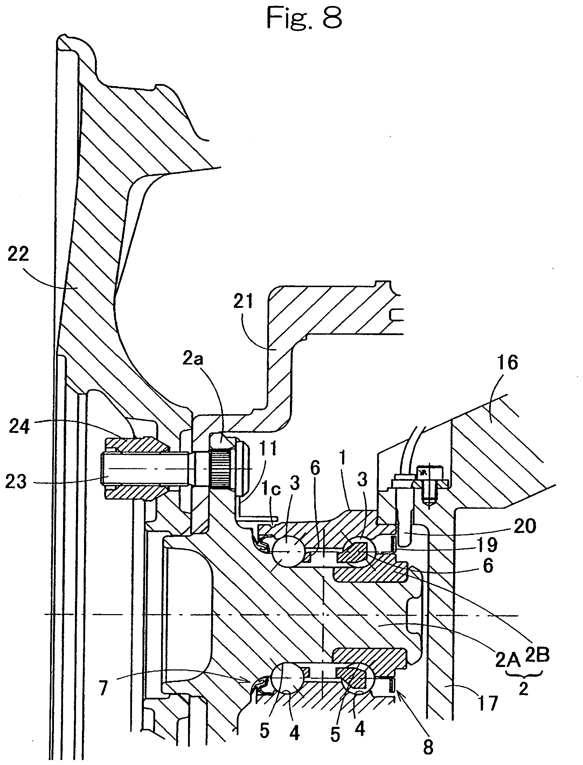

The inboard sealing structure 8 shown in Fig. 1A is formed as a combination seal including a core metal 14 of a generally L-sectioned configuration, having a cylindrical wall 14a and an upright wall 14b, and a contact seal 15 held in contact with an inner-side surface of the upright wall 14b of the core metal 14. In such case, an outer-side surface of the upright wall 14b facing the outside of the bearing space may be secured with a multipolar magnet 19 shown in Fig. 8 to render the core metal 14 to serve as a slinger and concurrently as a magnetic encoder. The multipolar magnet 19 is of a ring-shaped configuration having magnetic poles magnetized alternately in a circumferential direction. By arranging a magnetic sensor 20 in face-to-face relation with the multi-polar magnet 19, a rotation detecting device for detecting the number of revolution of a vehicle wheel can be constructed. An inboard end of the wheel support bearing assembly has its end face closed in its entirety with a sealing cap 17 fitted to the outer member 1. The magnetic sensor 20 may be fitted to this sealing cap 17.

According to the wheel support bearing assembly of this construction, since the outboard sealing structure 7 shown in Fig. 1B is constructed with the contact seal 9 and the labyrinth seal 10 and since the groove 1c defining the guide structure is formed in the outer peripheral surface 1b of the outer member 1 so as to occupy a position in the labyrinth seal 10, dust and muddy water from the outside can be prevented from intruding into the bearing space through the labyrinth seal 10.

In particular, since water flowing in between the shielding plate 11 and the outer member 1 along the flange 2a and shielding plate 11 and water flowing in between the shielding plate 11 and the outer member 1 along the outer peripheral surface of the outer member 1 are guided in a direction downwardly of the outer member 1 through the groove 1c, an effect of preventing the intrusion of the muddy water towards the contact seal 9 becomes high.

Because of that, even though the outboard sealing structure 7 is placed under the environment exposed to muddy water, intrusion of the muddy water towards the sealing surface 2c of the inner member 2 can be prevented and a possible rusting of the sealing surface 2c can be suppressed. Accordingly, even if the contact seal 9 is simplified in structure, not only can a sufficient sealing function be secured, but frictional wear of the contact seal 9, which would be brought about by rusting of the sealing surface 2c, does not take place, thereby eliminating the fear of the sealability being reduced. In this example, as a manner of simplifying the contact seal 9, the sealing lips 13b and 13c, which serve as the dust lips, are rendered to contact the sealing surface 2c of the inner member 2 under no interference. For this reason, although as compared with the sealing lip held under interference, the sealing function of the contact seal 9 may be lowered, the presence of the labyrinth seal 10 and the groove 1c is effective to allow the sealing structure 7 as a whole to secure a sufficient sealing function. Thus, the rotational torque resulting from the contact friction between the contact seal 9 and the sealing surface 2c can be reduced, contributing to increase of the vehicle mileage.

It is to be noted that as a structure for reducing the contact friction of the contact seal 9, although in the above described example, the sealing lips 13b and 13c have been shown and described as held in contact with the sealing surface 2c under no interference, the contact friction may be reduced if the interference is minimized.

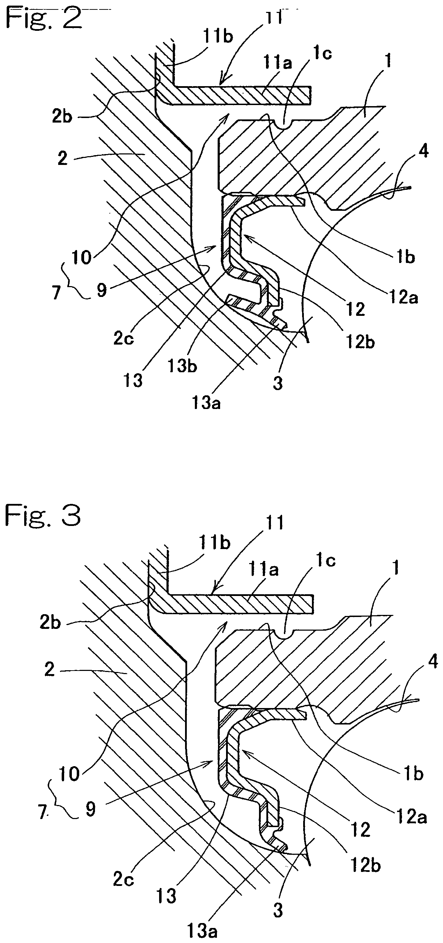

Figs. 2 and 3 illustrate a different example of the contact seal 9 shown in Fig. 1B. If the outermost sealing lip 13c, which serves as the dust lip in Fig. 1B, is dispensed with as shown in Fig. 2 or the two sealing lips 13b and 13c, which serve as the dust lip, are dispensed with as shown in Fig. 3, the contact friction between the contact seal 9 and the sealing surface 2c can be minimized.

If the number of the sealing lips is reduced in the manner described - above, the shape of the contact seal 9 can be simplified with the consequent reduction of the axial dimension of the contact seal 9. Accordingly, the axial length of the sealing surface 2c for contact with the contact seal 9 can be reduced, resulting in reduction of the axial length of the bearing assembly. Therefore, reduction in weight of the wheel support bearing assembly becomes possible and, in this respect, it can contribute to increase of the vehicle mileage. In the examples shown in Figs. 2 and 3, the structure other than the contact seal 9 is similar to that shown in Fig. 1B and, therefore, the description thereof is not reiterated while like parts are designated by like reference numerals.

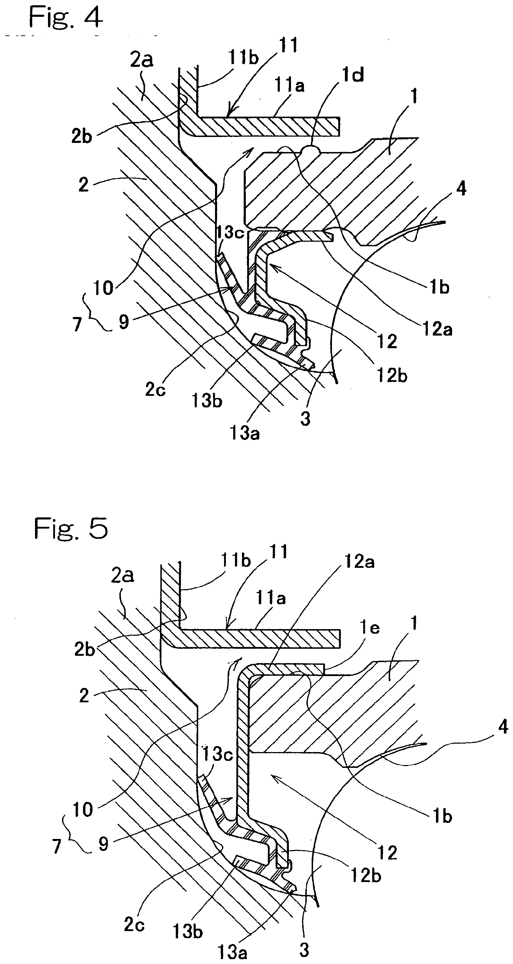

Fig. 4 illustrates a second preferred embodiment of the present invention. This wheel support bearing assembly is such that the guide structure in the outboard sealing structure 7 is constituted by a projection 1d that is formed in the outer peripheral surface 1b of the outer member I so as to extend circumferentially thereof. This projection 1d is positioned in the labyrinth seal 10 defined by the gap between the shielding plate 11, mounted on the wheel mounting flange 2a of the inner member 2 in a manner similar to that of the first embodiment, and the outer peripheral surface 1b of the outer member 1. In this second embodiment, water flowing in between the shielding plate 11 and the outer member 1 along the flange 2a and shielding plate 11 and water flowing in between the shielding plate 11 and the outer member 1 along the outer peripheral surface of the outer member 1 can be dammed by the projection 1d and can be guided in a direction downwardly of the outer member 1 straightforward without flowing towards the outboard end of the outer member 1. Accordingly, intrusion of the muddy water towards the area around the contact seal 9 and the sealing surface 2c can be prevented.

The function of the projection 1d to prevent the intrusion of the muddy water, coupled with the function of the labyrinth seal 10 is effective to enhance the sealing function of the outboard sealing structure 7. Accordingly, the rotational torque resulting from the contact friction between the contact seal 9 and the sealing surface 2c can be reduced, contributing to increase of the vehicle mileage, as is the case with the first embodiment. Also, in view of the excellent sealing function of the second embodiment, simplification of the contact seal 9 such as shown in Fig. 2 or Fig. 3 can be accomplished even in this second embodiment. Other structural features and effects are identical with those of the first embodiment and the details thereof are not reiterated while like parts are designated by like reference numerals.

Fig. 5 illustrates a third illustrative embodiment. The core metal 12 of the generally L-sectioned configuration forming the contact seal 9 is fixed in position on the outer member 1 by mounting the cylindrical wall 12a onto the outer peripheral surface 1b of the outer member 1 from the outboard side. A gap between an outer peripheral surface of this cylindrical wall 12a and the inner peripheral surface of the shielding plate 11 is rendered to be a labyrinth seal 10. In this third embodiment, an inboard end 1e of the cylindrical wall 12a as one component part of the contact seal 9 functions as a guide structure. Water flowing in between the shielding plate 11 and the outer member 1 along the flange 2a and shielding plate 11 and water flowing in between the shielding plate 11 and the outer member 1 along the outer peripheral surface of the outer member 1 can be dammed by the inboard end 1c and can be guided in a direction downwardly of the outer member 1 straightforward without flowing towards the outboard end of the outer member 1. Accordingly, an effect of preventing the intrusion of the muddy water towards the contact seal 9 can be enhanced.

The function of the inboard end 1e to prevent the intrusion of the muddy water, coupled with the function of the labyrinth seal 10 is effective to enhance the sealing function of the outboard sealing structure 7 in a manner similar to that of the first embodiment. Accordingly, the rotational torque resulting from the contact friction between the contact seal 9 and the sealing surface 2c can be reduced, contributing to increase of the vehicle mileage. Also, in view of this excellent sealing function, simplification of the contact seal 9 such as shown in Fig. 2 or Fig. 3 can be accomplished even in this third embodiment. Other structural features and effects are identical with those of the first embodiment and the details thereof are not reiterated while like parts are designated by like reference numerals.

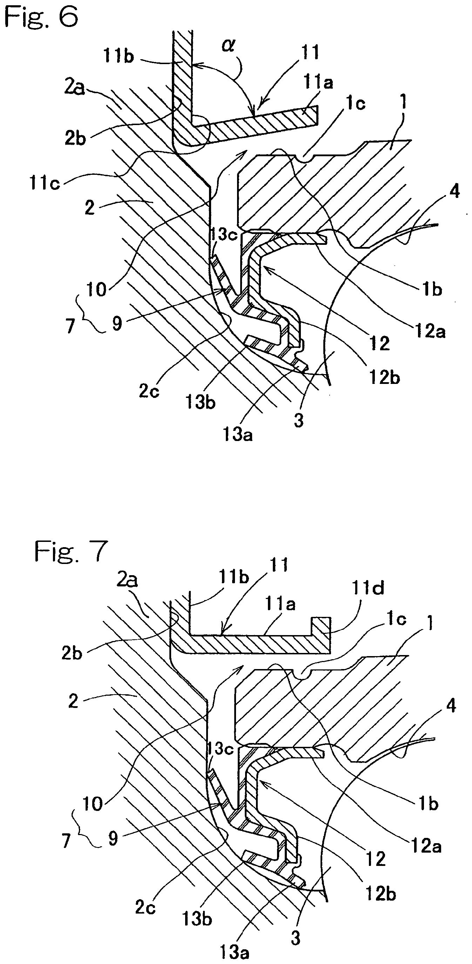

Fig. 6 illustrates a fourth preferred embodiment of the present invention. In the first embodiment shown in Fig. 1, the tubular wall 11a of the shielding plate 11 in the outboard sealing structure 7 is so shaped as to have a water return for returning water, flowing along an outer surface of the shielding plate 11, towards a base end of the tubular wall 11a (a corner area 11c between the tubular wall 11a and the upright wall 11b). More specifically, by selecting an angle α between the tubular wall 11a and the upright wall 11b to be of a value smaller than 90°, the tubular wall 11a is formed to have a tapered shape with the diameter of a free end thereof greater than that of the base end 11c to define the water return. In the case of this construction, the gap of the labyrinth seal 10 flares towards the inboard side, but water flowing along the inboard surface 2b of the wheel mounting flange 2b and the upright wall 11b or water flowing along the outer peripheral surface of the tubular wall 11a can be collected at the corner area 11c and be then guided downwardly of the shielding plate 11.

On the other hand, the outer peripheral surface 1b of the outer member 1 is, as is the case with the first embodiment, formed with the circumferentially extending groove 1c that is covered by the shielding plate 11 and positioned in the labyrinth seal 10. This groove 1c constitutes the guide structure. Accordingly, since water flowing in between the shield plate 11 and the outer member 1 along the outer peripheral surface of the outer member 1 can be guided downwardly of the outer member 1 by the groove 1c, intrusion of muddy water towards the contact seal 9 can be substantially avoided, coupled with the function of the water return of the tubular wall 11a. Other structural features and effects are identical with those of the first embodiment and the details thereof are not reiterated while like parts are designated by like reference numerals.

Fig. 7 illustrates a modified form of the fourth embodiment shown in Fig. 6. The tubular wall 11a of the shielding plate 11 is rendered to represent a cylindrical shape and an inboard free end of this cylindrical wall 11a is provided with an outwardly oriented collar 11d. This collar 11d forms the water return. Accordingly, water flowing along the inboard surface 2b of the wheel mounting flange 2a and the upright wall 11b or water flowing along the outer peripheral surface of the cylindrical wall 11a is guided to the outside through the outer peripheral surface of the cylindrical wall 11a in a direction downwardly of the shielding plate 11 straightforward. The respective structures of the labyrinth seal 10 and the groove 1c are similar to those described hereinbefore and, therefore, by the synergic effect of the labyrinth seal 10, the groove 1c and the collar 11d, the function of preventing the muddy water from entering the contact seal area can be enhanced. Other structural features are identical with those of the first embodiment. It is to be noted that the shape of the shielding plate 11 in the embodiment shown in any one of Figs. 6 and 7 can be equally applied to the embodiment shown in any one of Figs. 4 and 5.

The shielding plate 11 employed in any one of the foregoing embodiments exhibits the above described sealing function by positioning the tubular wall 11a in the vicinity of the outer peripheral surface 1b of the outer member I on the outboard end to define the labyrinth seal 10. However, since the shielding plate 11 is employed under the environment exposed to the muddy water, it is preferably made of a material having a resistance to corrosion. Thereby, the sealing function can be long sustained. The gap of the labyrinth seal 10 is preferably of a size about 0.5 mm (or 0.4 to 0.8 mm including a tolerance).

It is to be noted that in any one of the foregoing embodiments, the wheel support bearing assembly has been described, in which the outer member 1 serves as the stationary member and the inner member 2 serves as the rotatable member, but on the contrary thereto, the present invention can be applied to a wheel support bearing assembly, in which the outer member 1 serves as a rotatable member and the inner member 2 serves as a stationary member and even in such case, effects similar to those described hereinbefore can be obtained.

Fig. 8 illustrates a peripheral structure of the wheel support bearing assembly according to the first embodiment. The outer member 1 is fixed to a knuckle 16 of a suspension system and the knuckle 16 is provided integrally with a seal cap 17 covering the inboard end of the bearing assembly. Also, the wheel support bearing assembly shown therein is designed to be of a structure, in which the inboard sealing structure 8 is provided with the multipolar magnet 19 to form the magnetic encoder, and the magnetic sensor 20 confronting the multi-polar magnet 19 is installed on the knuckle 16. The wheel mounting flange 2a of the inner member 2 has hub bolts 23 press-fitted therein. A brake rotor 21 and a rim portion 22 of the wheel are, in an overlapped relation, mounted on the hub bolts 23 and are held in position with nuts 24 fastened to the corresponding hub bolts 23. Other structural features are identical with those in the embodiment shown in Fig. 1 and, therefore, the description thereof are not reiterated while like parts are designated by like reference numerals. Also, this peripheral structure of the bearing assembly of the first embodiment can be applied not only to the first embodiment, but also to the peripheral structure of any one of the other embodiments.

## Claims

1. A wheel support bearing assembly for rotatably supporting a wheel (22) relative to a vehicle body structure (16), which assembly comprises an outer member (1) having an inner peripheral surface formed with double rows of raceway surfaces (4), an inner member (2) having an outer peripheral surface formed with double rows of raceway surfaces (5) in face-to-face relation with the raceway surfaces (4) of the outer member (1), and also having an outboard portion of the outer peripheral surface formed with a wheel mounting flange (2a), double rows of rolling elements (3) interposed between the opposed raceway surfaces (4,5), and outboard and inboard sealing structures (7, 8) for sealing opposite open ends of an annular bearing space delimited between the outer member (1) and the inner member (2);
wherein the wheel mounting flange (2a) is provided with a shielding plate (11) having a tubular wall (11a) that is positioned in the vicinity of an outer peripheral surface (1b) of an outboard end of the outer member (1) so as to form a labyrinth seal (10) between the tubular wall (11a) of the shielding plate (11) and the outer member (1);
wherein the shielding plate (11) is a member of a L-sectioned configuration including the tubular wall (11a) and an upright wall (11b) extending radially outward from the tubular wall (11a), and the upright wall (11b) is secured to an inboard surface (2b) of the wheel mounting flange (2a); and
wherein the outer peripheral surface (1b) of the outer member (1) is provided with a guide structure (1c, 1d, 1e) in a portion of the outer peripheral surface (1b) axially covered by the tubular wall (11a) of the shielding plate (11) in the labyrinth seal (10) for guiding in a direction downwardly of the outer member (1), a water flowing into between the shielding plate (11) and the outer member (1) along the flange and the shielding plate (11) and, also, a water flowing in between the shielding plate (11) and the outer member (1) along the outer peripheral surface (1b) of the outer member (1).

2. The wheel support bearing assembly as claimed in Claim 1, wherein the guide structure is a groove (1c) defined in the outer peripheral surface (1b) of the outer member (1) in a direction circumferentially thereof.

3. The wheel support bearing assembly as claimed in Claim 1, wherein the guide structure is a projection (1d) defined in the outer peripheral surface (1b) of the outer member (1) in a direction circumferentially thereof.

4. The wheel support bearing assembly as claimed in Claim 1, wherein the tubular wall (11a) forming a part of the shielding plate (11) is of a shape having a water return capable of returning the water, flowing along an outer surface (11d) of the shielding plate (11), towards a base end of the tubular wall.

5. The wheel support bearing assembly as claimed in Claim 1, wherein the shielding plate (11) is made of a material having a resistance to corrosion.

## Patentansprüche

1. Radträgerlagerbaugruppe zum drehbaren Tragen eines Rads (22) im Verhältnis zu einer Fahrzeugkarosseriestruktur (16), wobei die Baugruppe ein äußeres Element (1), das eine innere Peripheriefläche aufweist, die mit doppelten Reihen von Laufringflächen (4) gebildet ist, ein inneres Element (2), das eine äußere Peripheriefläche aufweist, die mit doppelten Reihen von Laufringflächen (5) in gegenüberstehender Beziehung zu den Laufringflächen (4) des äußeren Elements (1) gebildet ist, umfasst und auch einen außenliegenden Abschnitt der äußeren Peripheriefläche, der mit einem Radmontageflansch (2a), doppelten Reihen von Rollelementen (3), die zwischen den gegenüberliegenden Laufringflächen (4, 5) eingeschoben sind, und außen- und innenliegenden Strukturen (7, 8) zum Abdichten gegenüberliegender offener Enden eines ringförmigen Lagerraums, der zwischen dem äußeren Element (1) und dem inneren Element (2) begrenzt ist, gebildet ist;
- wobei der Radmontageflansch (2a) mit einer Abschirmplatte (11) versehen ist, die eine röhrenförmige Wand (11a) aufweist, die in der Nähe einer äußeren Peripheriefläche (1b) eines außenliegenden Endes des äußeren Elements (1) positioniert ist, um eine Labyrinthdichtung (10) zwischen der röhrenförmigen Wand (11a) der Abschirmplatte (11) und dem äußeren Element (1) zu bilden;
- wobei die Abschirmplatte (11) ein Element mit einer Konfiguration mit L-förmigem Querschnitt ist, welche die röhrenförmige Wand (11a) und eine aufrechte Wand (11b), die sich von der röhrenförmigen Wand (11a) aus radial nach außen erstreckt, umfasst, und die aufrechte Wand (11b) an einer innenliegenden Fläche (2b) des Radmontageflansches (2a) befestigt ist; und
- wobei die äußere Peripheriefläche (1b) des äußeren Elements (1) mit einer Führungsstruktur (1c, 1d, 1e) in einem Abschnitt der äußeren Peripheriefläche (1b) versehen ist, die durch die röhrenförmige Wand (11a) der Abschirmplatte (11) in der Labyrinthdichtung (10) axial abgedeckt ist, um Wasser, das zwischen der Abschirmplatte (11) und dem äußeren Element (1) entlang dem Flansch und der Abschirmplatte (11) fließt, und auch Wasser, das zwischen der Abschirmplatte (11) und dem äußeren Element (1) entlang der äußeren Peripheriefläche (1b) des äußeren Elements (1) fließt, in einer Richtung an dem äußeren Element (1) nach unten zu führen.

2. Radträgerlagerbaugruppe nach Anspruch 1, wobei die Führungsstruktur eine Nut (1c) ist, die in der äußeren Peripheriefläche (1b) des äußeren Elements (1) in einer Umfangsrichtung desselben definiert ist.

3. Radträgerlagerbaugruppe nach Anspruch 1, wobei die Führungsstruktur ein Vorsprung (1d) ist, der in der äußeren Peripheriefläche (1b) des äußeren Elements (1) in einer Umfangsrichtung desselben definiert ist.

4. Radträgerlagerbaugruppe nach Anspruch 1, wobei die röhrenförmige Wand (11a), die einen Teil der Abschirmplatte (11) bildet, eine Form aufweist, die einen Wasserrücklauf aufweist, der das Wasser, das entlang einer äußeren Oberfläche (11d) der Abschirmplatte (11) fließt, in Richtung auf ein Basisende der röhrenförmigen Wand zurückführen kann.

5. Radträgerlagerbaugruppe nach Anspruch 1, wobei die Abschirmplatte (11) aus einem Material besteht, das korrosionsfest ist.

## Revendications

1. Un ensemble support de roue destiné à supporter en rotation une roue (22) par rapport à une structure (16) de carrosserie de véhicule, comprenant un élément externe (1) ayant une surface périphérique interne formée de doubles rangées de surfaces de chemin de roulement (4), un élément interne (2) ayant une surface périphérique externe formée de deux rangées de surfaces de chemin de roulement (5) dans une relation face à face avec les surfaces de roulement (4) de l'élément externe (1), et ayant également une portion extérieure de la surface périphérique externe formée avec une bride (2a) de montage de roue, deux rangées d'éléments de roulement (3) interposées entre les surfaces de chemin de roulement opposées (4,5), et des structures d'étanchéité intérieures et extérieures (7, 8) pour sceller les extrémités ouvertes opposées d'un espace de support annulaire délimité entre l'élément externe (1) et l'élément interne (2);
- dans lequel la bride (2a) de montage de roue est munie d'une plaque de protection(l 1) ayant une paroi tubulaire (11a) qui est positionnée au voisinage d'une surface périphérique externe (1b) d'une extrémité extérieure de l'élément externe (1) afin de former un joint labyrinthe (10) entre la paroi tubulaire (11a) de la plaque de protection (11) et l'élément externe (1);
- dans lequel la plaque de protection (11) est un élément d'une configuration de section en L incluant la paroi tubulaire (11a) et une paroi verticale (11b) s'étendant radialement vers l'extérieur par rapport à la paroi tubulaire (11a), et la paroi verticale (11b) est fixée à une surface interne (2b) de la bride (2a) de montage de roue; et
- dans lequel la surface périphérique externe (1b) de l'élément externe (1) est munie d'une structure de guidage (1c, 1d, 1e) dans une portion de la surface périphérique externe (1b) couverte axialement par la paroi tubulaire (11a) de la plaque de protection (11) dans le joint labyrinthe (10) pour le guidage selon une direction dirigée vers le bas de l'élément externe (1), une eau s'écoulant entre la plaque de protection (11) et l'élément externe (1) le long de la bride et de la plaque de protection (11) et, également, une eau s'écoulant entre la plaque de protection (11) et l'élément externe (1) le long de la surface périphérique externe (1b) de l'élément externe (1).

2. L'ensemble de support de roue tel que revendiqué dans la revendication 1, dans lequel la structure de guidage est une rainure (1c) définie dans la surface périphérique externe de l'élément externe (1b) et l'élément externe (1) selon une direction circonférentielle de celle-ci.

3. L'ensemble de support de roue tel que revendiqué dans la revendication 1, dans lequel la structure de guidage est une partie en saillie (1d) définie dans la surface périphérique externe (1b) de l'élément externe (1) dans une direction circonférentielle de celle-ci.

4. L'ensemble de palier de support de roue tel que revendiqué dans la revendication 1, dans lequel la paroi tubulaire (11a) formant une partie de la plaque de protection (11) présente une forme donnant lieu à un retour d'eau capable de renvoyer l'eau s'écoulant le long d'une surface extérieure (11d) de la plaque de protection (11) vers une extrémité de base de la paroi tubulaire.

5. L'ensemble de palier de support de roue selon la revendication 1, dans lequel la plaque de protection (11) est constituée d'un matériau ayant une résistance à la corrosion.
